# EUROPÄISCHE PATENTANMELDUNG

(11) **EP 2 829 658 A1**
(43) Veröffentlichungstag der Anmeldung: **28.01.2015**
(21) Anmeldenummer: 14176857.2
(22) Anmeldetag: 14.07.2014
(51) Int. Cl.: E01C 23/09, B23B 51/04, B28D 1/04

(54) **Rotationswerkzeug zum Heraustrennen eines Oberflächenbereichs einer festen Oberfläche**

(30) Priorität: 24.07.2013 DE 102013012256
(71) Anmelder: Steinhauser Spezialmaschinen GmbH, 72519 Veringenstadt (DE)
(72) Erfinder: Steinhauser, Claus, 72519 Veringenstadt (DE)
(74) Vertreter: Otten, Roth, Dobler & Partner

(57) **Zusammenfassung**

Es wird eine Vorrichtung zum Bearbeiten einer festen Oberfläche mit einem um eine Rotationsachse antreibbaren Rotationswerkzeug zum Heraustrennen eines Oberflächenbereichs der festen Oberfläche vorgeschlagen, wobei die Vorrichtung derart ausgebildet ist, dass die Vorrichtung für einen Arbeitsbetrieb an einem Tragfahrzeug aufnehmbar ist. Das Rotationswerkzeug weist eine Bohrkrone (1) mit einem Mantelabschnitt (9) auf, der sich zur Rotationsachse entlang einer konzentrischen Kreislinie und in axialer Richtung erstreckt, so dass im Arbeitsbetrieb mit der Bohrkrone (1) der Oberflächenbereich mit kreisrunder Grundfläche heraustrennbar ist, wobei die Bohrkrone (1) Halteabschnitte umfasst, welche über eine Verstellanordnung in radialer Richtung zur Rotationsachse verstellbar sind, so dass der herausgetrennte Oberflächenbereich durch umfänglich am Oberflächenbereich andrückende Halteabschnitte am Rotationswerkzeug festhaltbar ist.

## Beschreibung

### Stand der Technik

Vorrichtungen zum Bearbeiten einer festen Oberfläche wie beispielsweise einer Straßendecke oder dergleichen sind bekannt, beispielsweise um beschädigte Oberflächenbereiche zu reparieren oder um einen Zugang zu Bereichen unter der Oberfläche zu ermöglichen. Derartige Vorrichtungen weisen entsprechende materialabtragende Werkzeuge beispielsweise ein um eine Rotationsachse antreibbares Rotationswerkzeug zum Heraustrennen eines Oberflächenbereichs der festen Oberfläche auf. Die Vorrichtung kann insbesondere als Anbaugerät für einen lösbaren Anbau an einem Tragfahrzeug ausgebildet sein.

### Aufgabe und Vorteile der Erfindung

Aufgabe der vorliegenden Erfindung ist es, eine Vorrichtung bzw. ein Rotationswerkzeug der oben genannten Art verbessert bereitzustellen, insbesondere um im Praxisbetrieb einen zügigen Arbeitsablauf zu gewährleisten.

Diese Aufgabe wird durch die unabhängigen Ansprüche gelöst.

Die abhängigen Ansprüche betreffen vorteilhafte Varianten der Erfindung.

Die Erfindung geht aus von einer Vorrichtung zum Bearbeiten einer festen Oberfläche wie einer Straßendecke und dergleichen mit einem um eine Rotationsachse antreibbaren Rotationswerkzeug zum Heraustrennen eines Oberflächenbereichs der festen Oberfläche, wobei die Vorrichtung für einen Arbeitsbetrieb an einem Tragfahrzeug aufnehmbar ist.

Die Vorrichtung ist insbesondere derart ausgebildet, dass die Vorrichtung für einen Arbeitsbetrieb an einem Trag- bzw. Arbeitsfahrzeug wie zum Beispiel einem Radlader anbaubar bzw. antreibend verbunden aufnehmbar ist. Die Vorrichtung ist insbesondere lösbar an dem Tragfahrzeug angebracht werden. Die Vorrichtung erfährt im angebrachten Zustand beim Arbeitsbetrieb eine beispielsweise motorische Antriebswirkung durch das Tragfahrzeug.

In der Regel erfolgt auch die Kontrolle und die Bedienung der Vorrichtung über am Tragfahrzeug fest vorhandene Einrichtungen.

Der Kern in der Erfindung liegt darin, dass das Rotationswerkzeug eine Bohrkrone mit einem Mantelabschnitt aufweist, der sich zur Rotationsachse entlang einer konzentrischen Kreislinie und in axialer Richtung erstreckt, so dass im Arbeitsbetrieb mit der Bohrkrone der Oberflächenbereich mit kreisrunder Grundfläche heraustrennbar ist, wobei Halteabschnitte vorgesehen sind, welche über eine Verstellanordnung in radialer Richtung zur Rotationsachse verstellbar sind, so dass der heraus getrennte Oberflächenbereich durch umfänglich am Oberflächenbereich andrückende Halteabschnitte am Rotationswerkzeug festhaltbar ist. die Halteabschnitte sind insbesondere an der Bohrkrone vorhanden bzw. der Bohrkrone zugehörig.

Damit kann besonders vorteilhaft der aus der Oberfläche herausgetrennte Oberflächenbereich unmittelbar nach dem Heraustrennen, also noch im von dem Mantelabschnitt umschlossenen Zustand am Werkzeug fixiert werden, um den Oberflächenbereich von dem Arbeitsbereich an der Oberfläche wegbewegen zu können. Das Heraustrennen und anschließenden Festhalten erfolgt durch direkt aufeinanderfolgende Schritte bzw. effektiv mit demselben Werkzeug. Ein bisher ggf. umständliches Umsetzen der materialabtragenden Vorrichtung nach dem Heraustrennen und den Einsatz eines anderen Werkzeugs beispielsweise zum Anheben, Wegtransportieren bzw. absetzen des herausgetrennten Oberflächenbereichs ist erfindungsgemäß vorteilhaft nicht nötig. Denn mit der vorgeschlagenen Vorrichtung können sämtliche betreffenden Arbeitsschritte mit genau einem bzw. mit der erfindungsgemäßen Vorrichtung samt dem entsprechenden Rotationswerkzeug durchgeführt werden.

Dabei ist es vorteilhaft, dass die Halteabschnitte so ausgebildet sind, dass diese die aus der Oberfläche herausgebohrte zusammenhängend vorhandene Materialscheibe nach dem Heraustrennen durch lediglich eine vergleichsweise geringe und schnell einrichtbare Versetzbewegung der Halteabschnitte fixieren können. Das Festhalten erfolgt vorteilhaft umfänglich klemmend bzw. andrückend außen am Umfang des Oberflächenbereichs. Die andrückende Anlage der Halteabschnitte kann z. B. über den nahezu gesamten Umfang des Oberflächenbereichs oder über zwei oder drei oder mehrere Stellen oder Bereiche am Außenumfang des Oberflächenbereichs eingerichtet sein.

Vorteilhaft können die Halteabschnitte entsprechend der Verstellung in radialer Richtung nach innen bzw. zur Rotationsachse hin wieder nach außen in entgegengesetzter Richtung bewegt werden, so dass der zuvor festgeklemmte Oberflächenbereich wieder freigegeben wird und z. B. durch das Eigengewicht unterstützt nach unten fällt. Dies erfolgt in der Regel nach einer zuvor stattgefundenen Positionsveränderung der gesamten Vorrichtung bzw. des Werkzeugs an einen Ort, an dem der herausgetrennte Oberflächenbereich abgeladen werden soll. Die Halteabschnitte und die Verstellanordnung müssen so konzipiert sein, dass eine ausreichend große Haltekraft über die Dauer des Haltezustands sicher eingerichtet ist. Die Haltekraft kann dabei erheblich sein, um z. B. aus Bitumen oder Beton und dergleichen bestehende herausgetrennte Oberflächenbereich fest halten zu können. Der Durchmesser der Bohrkrone beträgt zum Beispiel typischerweise zwischen ca. 70 und 150 Zentimeter, womit entsprechende herausgetrennte scheibenförmige Oberflächenbereiche mit dieser Größe und einer Dicke von zum Beispiel 10 bis über 20 Zentimetern ein beträchtliches Gewicht aufweisen, so dass dementsprechende Haltekräfte notwendig sind.

Die Bohrkrone bzw. der Mantelabschnitt ist insbesondere in der Grundform hohlzylinderförmig mit am freien unteren stirnseitigen Ende vorhandenen Bohr- bzw. Sägeeinsätzen aus einem vergleichsweise sehr harten bzw. widerstandsfähigen Werkzeugmaterial.

Mit der vorgeschlagenen Vorrichtung können insbesondere Reparaturmaßnahmen von beschädigten Fahrbahnbelägen verbessert und effektiver vorgenommen werden. Zum Beispiel kann im Bereich von meist ohnehin in etwa runden Schlaglöchern in Straßenbelägen der Straßenbelag durch Heraustrennen eines in der Grundform runden Teilvolumens vorteilhaft erfolgen. Vorteilhaft wird in der Straßendecke mit der erfindungsgemäßen Vorrichtung ein rundes Loch mit einem definierten Übergang zum unbeschädigten Fahrbahnbelag bzw. mit einer definierten bzw. rechtwinkligen Kante erstellt, so dass durch ein nachfolgendes Verfüllen des runden Lochs mit Bitumen oder dergleichen das Loch wieder eben zum restlichen Fahrbahnbelag und spaltfrei verfüllt werden kann. Damit wird mit der Erfindung eine gegenüber bisherigen Maßnahmen wirtschaftlich und technisch verbesserte Vorgehensweise bereitgestellt. Dies spart z. B. auf kommunaler Ebene oder bei übergeordneten Organisationen erhebliche Kosten bei der Instandhaltung von Fahrbahnen und Straßen.

Weiter ist es vorteilhaft, dass der Mantelabschnitt mehrere zur Rotationsachse umfänglich getrennte Mantelelemente aufweist, wobei wenigstens zwei Mantelelementen zur Rotationsachse in radialer Richtung verstellbar sind. Die wenigstens zwei bzw. mehreren umfänglich getrennten Mantelelemente können beispielsweise Bohr-Sägeelemente eines als Bohr-Sägeeinheit ausgebildeten Rotationswerkzeugs sein. Der Mantelabschnitt bzw. die Bohrkrone kann auf unterschiedliche Art und Weise ausgestaltet sein. Beispielsweise weist der Mantelabschnitt mehrere vollständig oder teilweise in axialer Richtung getrennte Mantelabschnitte auf. Die Trennung von benachbarten Mantelabschnitten kann durch in Umfangsrichtung trennende mehrere gleichförmige vergleichsweise schmale axiale Schlitze gebildet sein.

Grundsätzlich ist eine Vielzahl von Ausformungen der Bohrkrone möglich. Der Mantelabschnitt kann zum Beispiel alternativ auch in Umfangsrichtung nicht getrennt bzw. durchgängig z. B. rohrförmig sein.

Auch ist es vorteilhaft, dass die Halteabschnitte durch die wenigsten zwei Mantelelemente gebildet sind. Somit ist es bei Vorhandensein von mehreren voneinander zumindest im Wesentlichen getrennten Mantelelementen vorteilhaft möglich, die Halteabschnitte zu realisieren. Dies ist vorteilhaft gegenüber einer ebenfalls möglichen Bereitstellung der Halteabschnitte als zu den Mantelelementen insbesondere daran aufgenommenen Halteabschnitten, welche zur Bohr- bzw. Sägefunktion nicht beitragen.

Wenn die Halteabschnitte durch die Mantelelemente selbst gebildet sind, ist dies vorteilhaft, da die ohnehin vorhandenen Mantelelemente der Bohrkrone zusätzlich als Halteabschnitte dienen und neben dem Heraustrennen des Oberflächenbereichs auch zu dessen Festklemmen benutzt werden.

Insbesondere ist es vorteilhaft, dass sämtliche Mantelelemente verstellbar sind. Die Mantelelemente, sind insbesondere am Umfang getrennt beziehungsweise überwiegend oder komplett in axialer Erstreckung getrennt. Gegebenenfalls können zwei Mantelelemente über eine vergleichsweise schmale Verbindung gegebenenfalls verbunden bleiben. Insbesondere sind die Mantelelemente umfänglich getrennt aber im radial inneren Bereich der Bohrkrone untereinander verbunden. Insbesondere sind beispielsweise radial zur Rotationsachse gegenüberliegende Mantelabschnitte miteinander verbunden, und in radialer Richtung zur Rotationsachse nach innen zum Kern hin beziehungsweise nach außen verstellbar. Beispielsweise ist es vorteilhaft, dass insgesamt vier bis acht, insbesondere genau sechs Mantelabschnitte vorhanden sind. Auch ist es vorteilhaft, dass gemäß einer weiteren Variante der Erfindung insgesamt 16 bis 20 insbesondere genau 18 Mantelabschnitte jeweils in zumindest nahezu kompletter axialer Trennung vorhanden sind.

Bei einer Bohrkrone in durchgehend hohlzylindrischer Form bzw. ohne geteilte Mantelabschnitte, die nicht radial verstellbar sind, können Halteabschnitte an der Bohrkrone radial verstellbar vorhanden sein, beispielsweise für eine radiale Verstellbewegung beweglich geführt sein.

Eine vorteilhafte Modifikation des Erfindungsgegenstandes sieht vor, dass die Verstellanordnung derart gestaltet ist, dass die wenigstens zwei Mantelelemente gemeinsam gleichartig verstellbar sind. So kann ein besonders vorteilhafter Festklemm- und Loslassmechanismus der Mantelelemente realisiert sein.

Insbesondere ist es vorteilhaft, dass sämtliche Mantelelemente der Bohrkrone gemeinsam gleichartig verstellbar sind. Sind beispielsweise zwei oder mehr Mantelelemente vorhanden, kann mit deren gemeinsamer gleichartiger Verstellung der herausgetrennte Oberflächenbereich fest und sicher über nahezu den gesamten Umfang festgehalten werden.

Gemäß einer vorteilhaften Variante ist jede der wenigsten zwei Mantelelemente über eine jeweils zugehörige Lagerstelle am Rotationswerkzeug aufgenommen. Insbesondere sind sämtliche Mantelelemente über eine eigene Lagerstelle am Rotationswerkzeug aufgenommen. Insbesondere sind alle Mantelelementen über gleichartige bzw. identische gestaltete Lagerstellen aufgenommen. Die Lagerstellen können z. B. als Schwenk- oder Verschiebelagerung ausgestaltet sein. Über die Lagerstellen ist insbesondere eine radiale Abstandsveränderung eines jeweiligen Mantelelements relativ zur Rotationsachse möglich.

Gemäß einer vorteilhaften Ausführungsform des Erfindungsgegenstandes ist die Verstellanordnung derart ausgebildet, die Ausrichtung einer Längsachse der wenigstens zwei Mantelelemente in zur Rotationsachse axialer Richtung zu verändern. Dabei ist die Längsachse der wenigstens zwei Mantelelemente im Rotationsbetrieb parallel zur Rotationsachse ausgerichtet, entsprechend der zur Rotationsachse konzentrischen Anordnung der hohlzylindrischen Bohrkrone. Beispielsweise können die Mantelelemente nach dem Rotationsbetrieb über die Verstellanordnung in Längsrichtung in ihrer Neigung verstellbar bzw. schwenkbar oder anstellbar zur Rotationsachse sein. Damit wird die hohlzylindrische Form der wenigstens zwei Mantelelemente bzw. der Bohrkrone aufgegeben und in eine vergleichsweise gering geneigte Kegelstumpf-Form verändert.

Werden die Mantelelemente mit deren Bereichen, die außen zum herausgetrennten Oberflächenbereich benachbart sind, so radial nach innen bzw. zur Rotationsachse hin geneigt, dass diese außen am Oberflächenbereich in Anlage kommen, können die Mantelelemente den Oberflächenbereich andrückend festhalten. Der Neigungszustand muss solange gesichert erhalten bleiben, bis das Rotationswerkzeug mit dem ergriffenen Oberflächenbereich an eine gewünschte Abladestelle bewegt wird, an welcher der Oberflächenbereich abgeladen wird. Dies geschieht, indem die Mantelelemente wieder geringfügig radial nach außen versetzt werden, so dass der herausgetrennte Kern der festen Oberfläche unter seinem Gewicht nach unten aus der Bohrkrone herausfällt.

Weiterhin ist es vorteilhaft, dass die Verstellanordnung ein zur Rotationsachse in axialer Richtung bewegbares Stellelement umfasst, mit dem abhängig von der Position des Verstellelements entlang der Rotationsachse die Ausrichtung der jeweiligen Längsachse der wenigstens zwei Mantelelemente veränderbar ist. Dabei können die wenigstens zwei bzw. vorteilhaft sämtliche Mantelelemente schwenkbar bzw. winklig anstellbar gelagert sein. Mit der Positionsveränderung des Stellelements wirkt z. B. ein Moment um die Schwenkachse der Mantelelement-Lagerstellen derart, dass der untere Teil mit dem freie Randbereich der Bohrkrone veränderbar nach innen anstellbar ist und somit gegen den Umfang des herausgetrennten Oberflächenbereichs drückt.

Das Stellelement kann beispielsweise eine flache Keilscheibe mit einem konisch geformten Umfang sein, der gegen einen oberen Rand des schwenkbaren Mantelabschnitts derart drückt, dass dieser nach außen ausweicht und somit sich der untere Rand des Mantelabschnitts nach innen neigt.

Es ist über dies vorteilhaft, dass im Bereich der Bohrkrone ein Achselement entlang der Rotationsachse vorhanden ist, welches über ein Verbindungsteil mit den wenigstens zwei Mantelelementen verbunden ist, wobei die wenigstens zwei Mantelelemente bewegbar am Verbindungsteil aufgenommen sind. Das Verbindungsteil kann beispielsweise scheiben- oder speichenförmig sein. Damit können die Mantelelemente vorteilhafterweise schwenkbar um eine zur Rotationsachse quer stehende Achse gelagert sein. Das längliche Achselement verläuft insbesondere konzentrisch um die Rotationsachse und taucht von oben über einen Teil der gesamten Tiefe der Bohrkrone bis in den vom Mantelabschnitt umgebenen Hohlraum innerhalb der Bohrkrone hinein. Das Achselement ist vorteilhaft von einem Antrieb des Rotationswerkzeugs drehangetrieben und dient so als Rotationsantrieb für die Bohrkrone.

Weiterhin ist es von Vorteil, dass die Verstellanordnung eine Kulissenführung zur Verstellung des radialen Abstandes der wenigstens zwei Mantelabschnitte zur Rotationsachse aufweisen. Mit der Kulissenführung kann insbesondere eine Bewegung für die Mantelabschnitte derart bereitgestellt werden, dass die Mantelabschnitte gemäß einer linearen Bewegung zwangsgeführt sind. Die Bewegung der Mantelabschnitte erfolgt insbesondere in Richtung senkrecht auf die Rotationsachse zu bzw. von dieser weg. Die Kulissenführung ist insbesondere bei Anordnungen vorteilhaft, bei denen die wenigstens zwei bzw. ggf. sämtliche untereinander getrennten Mantelabschnitte der Bohrkrone über einen Lagerabschnitt wie zum Beispiel ein Lagerstift gehalten sind, wobei der Lagerabschnitt in Längsrichtung parallel zur Rotationsachse ausgerichtet ist. Die räumliche Verstellbewegung der Lagerabschnitte wird durch die Kulissenführung bestimmt, welche mit den Lagerabschnitten beim Verstellen zusammenwirkt.

Besonders bevorzugt ist es, wenn vorteilhafterweise die Kulissenführung zwei zur Rotationsachse axial benachbarte Stellscheiben mit jeweils wenigstens zwei Führungsbahnen umfasst, wobei die Führungsbahnen mit den wenigstens zwei Mantelelementen derart zusammenwirken, dass die wenigstens zwei Mantelelemente im gleichen radialen Abstand zur Rotationsachse vorhanden sind und der radiale Abstand der wenigstens zwei Mantelelemente zur Rotationsachse gleichartig vorgebbar veränderbar ist. Damit sind die zwei oder ggf. sämtliche Mantelelemente alle im gleichen radialen Abstand bzw. konzentrisch zur Rotationsachse aufgenommen. Zudem kann eine Verstellung der zwei oder ggf. aller Mantelabschnitte nur derart erfolgen, dass die Mantelabschnitte alle im selben Maß und in dieselbe Richtung relativ zur Rotationsachse im Radialabstand verstellt werden. Die Verstellung ist damit besonders vorteilhaft eingerichtet.

Vorteilhafterweise sind die beiden Stellscheiben derart aufeinander abgestimmt, dass durch gegenseitiges Verdrehen der zwei Stellscheiben um die Rotationsachse des Rotationswerkzeugs jedes Mantelelement der wenigstens zwei Mantelelemente entlang der beiden Führungsbahnen vorgebbar in seinem radialen Abstand zur Rotationsachse insbesondere in einem gleichen Maß verstellbar sind. So können die wenigsten zwei bzw. bevorzugt sämtliche Mantelelemente gleichartig von einem für alle Mantelemente gleichen radialen Abstand zur Rotationsachse nach außen oder innen verstellt werden.

Jedem Mantelabschnitt ist insbesondere genau eine erste Führungsbahn in einer ersten Stellscheibe und zusätzlich genau eine dazugehörige zweite Führungsbahn in einer zweiten Stellscheibe zugeordnet. Dabei greift zum Beispiel der Lagerabschnitt eines Mantelelements durch die erste und die zweite Führungsbahn, wobei die beiden zusammengehörigen Führungsbahnen benachbart sind bzw. in Richtung der Rotationsachse einen an das Außenmaß des Lagerabschnitts abgestimmten Durchlassmaß durch die beiden Stellscheiben für den betreffenden Mantelabschnitt bilden. Entsprechend ist für jedes weitere Mantelelement bzw. dessen Lagerabschnitt ein dazugehöriges Paar der Führungsbahnen in den beiden Stellscheiben vorhanden. Die Form bzw. der Verlauf aller ersten Führungsbahnen ist gleich, wobei diese in Umfangsrichtung auf der ersten Stellscheibe versetzt zueinander sind. Entsprechend ist die Form bzw. der Verlauf aller zweiter Führungsbahnen gleich, jedoch sind die Führungsbahnen in Umfangsrichtung auf der zweiten Stellscheibe versetzt zueinander und zwar im gleichen Maß versetzt wie die ersten Führungsbahnen in Umfangsrichtung auf der ersten Stellscheibe versetzt sind.

Mit der Verstellung durch die Stellscheiben können nicht nur die Mantelelemente zum Festhalten des herausgetrennten Oberflächenbereichs eingestellt werden, sondern es können außerdem unterschiedliche Bohrdurchmesser eines von der Bohrkrone herausgetrennten Oberflächenbereichs bzw. der passende Bohrkronendurchmesser eingestellt und somit zum Beispiel an die Größe eines beschädigten Fahrbahnbereichs angepasst werden.

Gemäß einer vorteilhaften Variante weist eine erste Stellscheibe für die Führung der wenigstens zwei Mantelelemente jeweils eine gleichartige gekrümmt ausgebildete Führungsbahn für das jeweilige Mantelelement auf. Bei zwei verstellbaren Mantelelementen sind demgemäß zwei zum Beispiel bananenförmig gekrümmte dazugehörige Führungsbahnen vorhanden. Jede Führungsbahn weist einen vergleichsweise großen Bahnradius auf und ermöglicht dadurch eine ruckfreie gleichmäßige Verstellung, so dass die Lagerabschnitte in der jeweiligen Führungsbahn problemlos gleitend bewegbar sind, wenn zum Beispiel eine Stellscheibe verdreht wird.

Es ist weiterhin vorteilhaft, dass eine zweite Stellscheibe für die Führung der wenigstens zwei Mantelelemente jeweils eine gleichartige, geradlinig, radial zur Rotationsachse verlaufende Führungsbahn für das jeweilige Mantelelement aufweist. Diese Führungsbahn gibt damit den radialen Abstand des jeweiligen Mantelelements entlang einer Radiallinie vor. Dabei kann z. B. der betreffende Lagerabschnitt durch die gekrümmte Führungsbahn der ersten Stellscheibe und zudem durch die geradlinige Führungsbahn der zweiten Stellscheibe greifen. Bei einer zum Verstellen drehbaren ersten Stellscheibe kann die zweite Stellscheibe ggf. nicht drehend um die Rotationsachse aufgenommen sein oder beide Stellscheiben sind verdrehbar gelagert.

Vorteilhafterweise reicht die Rotationsachse durch den jeweiligen Scheibenmittelpunkt der ersten und zweiten Stellscheibe. Auf die Scheibenmittelpunkte bezogen sind die gekrümmten Führungsbahnen über einen radialen Bereich der ersten Stellscheibe ausgebildet, über den auch die geradlinigen Führungsbahnen auf der zweiten Stellscheibe ausgebildet sind. Damit kann der jeweilige Lagerabschnitt eines Mantelelements über die gesamte Länge der gekrümmten und der geradlinigen Führungsbahn in den beiden Stellscheiben verschoben werden bzw. im radialen Abstand zur Rotationsachse verstellt werden.

Die Erfindung erstreckt sich außerdem auf ein Rotationswerkzeug zum Heraustrennen eines Oberflächenbereichs einer festen Oberfläche wie einer Straßendecke und dergleichen. Der Kernaspekt liegt darin, dass das Rotationswerkzeug eine Bohrkrone mit einem Mantelabschnitt aufweist, der sich zur Rotationsachse entlang einer konzentrischen Kreislinie und in axialer Richtung erstreckt, so dass im Arbeitsbetrieb mit der Bohrkrone der Oberflächenbereich mit kreisrunder Grundfläche heraustrennbar ist, wobei die Bohrkrone Halteabschnitte umfasst, welche über eine Verstellanordnung in radialer Richtung zur Rotationsachse verstellbar sind, so dass der herausgetrennte Oberflächenbereich durch umfänglich am Oberflächenbereich andrückende Halteabschnitte am Rotationswerkzeug festhaltbar ist. Damit lassen sich die oben diskutierten Vorteile mit dem Rotationswerkzeug erreichen.

Außerdem wird ein Fahrzeug wie zum Beispiel ein Spezialfahrzeug beispielsweise ein Radlader mit einer Vorrichtung wie oben erläutert vorgeschlagen.

### Figurenbeschreibung

Weitere Merkmale und Vorteile der Erfindung sind anhand von in den Figuren schematisch dargestellten erfindungsgemäßen Ausführungsbeispielen näher erläutert.

Im Einzelnen zeigt:
- Figur 1 und 2:: einen Teil eines erfindungsgemäßen Bearbeitungswerkzeugs schematisiert in perspektivischer Ansicht und von der Seite;
- Figur 3:: die Anordnung aus Figur 2 im Schnitt gemäß der Linie A - A in Figur 2;
- Figur 4:: einen Teil eines erfindungsgemäßen alternativen Bearbeitungswerkzeugs schematisiert in perspektivischer Ansicht;
- Figur 5:: die Anordnung gemäß Figur 4 von der Seite;
- Figur 6:: die Anordnung gemäß Figur 4 und 5 von oben;
- Figur 7 bis 9:: eine schematisierte Anordnung einer erfindungsgemäßen Bearbeitungsvorrichtung von der Seite in drei unterschiedlichen Betriebszuständen und
- Figur 10:: die Bearbeitungsvorrichtung gemäß Figur 8 von oben.

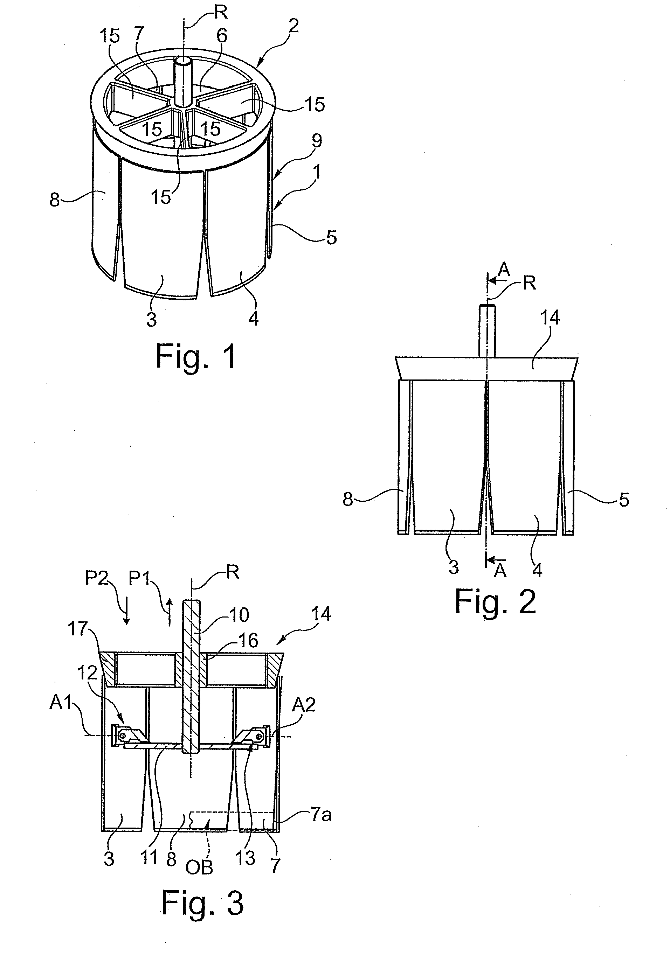

Figur 1 zeigt schematisiert ein Teil eines um eine Rotationsachse R antreibbaren Rotationswerkzeugs zum Beispiel in der Art eines Kernlochbohrers bzw. einer Bohr-Sägeeinheit einer erfindungsgemäßen Bearbeitungsvorrichtung zum Bearbeiten einer festen Oberfläche beispielsweise einer Straßendecke bzw. eines Straßenbelags und dergleichen. Das Rotationswerkzeug weist eine innen hohle Bohrkrone 1 mit einer Verstellanordnung 2 zum Verstellen der Bohrkrone 1 auf. Die Bohrkrone 1 ist in ihrer Grundform hohlzylinderförmig und umfasst hier beispielhaft sechs gleichartig gestaltete Bohr-Sägeelemente 3 bis 8, welche einen Mantelabschnitt 9 der Bohrkrone 1 bilden.

Die Bohr-Sägeelemente 3 bis 8 sind vollständig voneinander umfänglich zur Rotationsachse R getrennt, wobei jedes Bohr-Sägeelement 3 bis 8 ein Mantelelement der Bohrkrone 1 darstellt. Sämtliche Bohr-Sägeelemente 3 bis 8 sind gleichartig ausgebildet und weisen eine zum vorderen freien Ende hin zusammenlaufende Form mit schrägen Flanken und quer gerichteter Vorderkante auf.

Die Bohr-Sägeelemente 3 bis 8 sind über ein teilweise dargestelltes zylindrisches Achselement 10 im Arbeitsbetrieb rotierend um die Rotationsachse R antreibbar, wobei ein nicht dargestellter Antrieb das Achselement 10 antreibt.

Das Achselement 10 reicht bis etwa die halbe Tiefe der Bohrkrone 1 bzw. bis ungefähr eine halbe axiale Länge der Bohr-Sägeelemente 3 bis 8 in den von den Bohr-Sägeelementen 3 bis 8 umschlossenen Hohlraum. Am freien innerhalb der Bohrkrone 1 vorhandenen Ende des Achselements 10 ist eine Haltescheibe 11 fest vorhanden, deren Durchmesser geringer ist als ein Innendurchmesser der Bohrkrone 1. Jedes Bohr-Sägeelement 3 bis 8 ist innenseitig, axial und umfänglich etwa mittig, gleichartig mit der Haltescheibe 11 über jeweils ein Gelenk mit einer Gelenkachse angelenkt bzw. gelenkig verbunden. In Figur 3 ist ein Gelenk 12 am Bohr-Sägeelement 3 mit der Gelenkachsen A1 und ein Gelenk 13 am Bohr-Sägeelement 7 mit der Gelenkachsen A2 ersichtlich. Das Gelenk 12 ermöglicht eine geringe Verschwenkbewegung des Bohr-Sägeelements 3 um die Gelenkachse A1 beziehungsweise das Gelenk 13 ermöglicht eine geringe Verschwenkbewegung des Bohr-Sägeelements 7 um die Gelenkachse A2, wobei die Gelenkachsen A1 und A2 quer zur Rotationsachse R ausgerichtet sind. Über entsprechende weitere zu den Gelenken 12 und 13 gleichartige Gelenke sind auch die weiteren Bohr-Sägeelemente 1, 2 und 4 bis 6 an der Haltescheibe 11 um eine entsprechende Schwenkachse jeweils gelenkig anstellbar aufgenommen.

Am Achselements 10 ist oberhalb der Haltescheibe 11 im Bereich eines oberen Randes der Bohrkrone 1 eine Keilscheibe 14 mit einem umfänglich außen verlaufenden Kegelringabschnitt 17 und sechs daran radial nach innen ausgerichteten Speichen 15 über einen Lagerbuchsenabschnitt 16 mit Rundloch, durch den das Achselement 10 durchgreift, geführt vorhanden. Die Keilscheibe 14 ist parallel entlang der Rotationsachse R gemäß des Pfeils P1 am Achselement 10 nach oben bzw. gemäß des Pfeils P2 nach unten verschieblich bewegbar aufgenommen. Die Keilscheibe 14 kann axial gleitend an dem Achselement 10 verstellt werden.

Der Kegelringabschnitt 17 ist außen umfänglich konisch geformt mit in Richtung der Rotationsachse R zum freien Ende der Bohrkrone 1 hin sich verjüngender Form.

Die Keilscheibe 14 ist über nicht gezeigte Mittel in Richtung P1 oder P2 versetzbar. Im Bohr-Sägebetrieb der Bohrkrone 1 ist die Keilscheibe 14 so weit gemäß P1 nach oben versetzt, dass die Bohr-Sägeelemente 3 bis 8 mit ihrer Längsachse parallel zur Rotationsachse R stehen, was die Figuren 1 bis 3 zeigen. Lediglich in der Schnittdarstellung gemäß Figur 3 ist eine geneigte Stellung des Bohr-Sägeelements 7 angedeutet, womit sich dann eine räumlich geneigte Schnittkante 7a des Bohr-Sägeelements 7 bezogen auf die Schnittdarstellung gemäß Figur 3 ergibt.

Im Arbeitsbetrieb des Rotationswerkzeugs beziehungsweise bei rotierender Bohrkrone 1 zum Herausschneiden eines Oberflächenbereichs OB (s. Figur 3) einer festen Oberfläche ist die Keilscheibe 14 nicht wirksam nach oben verschoben, so dass die Bohr-Sägeelemente 3 bis 8 parallel zur Rotationsachse R ausgerichtet sind bzw. die Bohrkrone 1 einen hohlzylindrischen Mantelabschnitt aufweist. Mit der nach unten gemäß P2 verschobenen Keilscheibe 14 wird die Bohrkrone 1 in eine Hohlkegelstumpf-Form verstellt. Dabei wird jedes Bohr-Sägeelemente 3 bis 8 am oberen Rand durch die Keilscheibe 14 bzw. durch den Kegelringabschnitt 17 nach außen gedrückt, womit die gelenkig an der Haltescheibe 11 aufgenommenen Bohr-Sägeelemente 3 bis 8 nach vorne hin zusammenlaufend angestellt werden, entsprechend der Anstellung des Bohr-Sägeelements 7 bzw. dessen geneigt gezeigter Schnittkante 7a.

Dies erfolgt durch Verstellen der Keilscheibe 14 über die nicht näher dargestellten Mittel in Richtung P2 nach unten, so dass ein herausgetrennter Oberflächenbereich OB, der teilweise gestrichelt in Figur 3 angedeutet ist, unten festklemmend über die Bohr-Sägeelemente 3 bis 8 gehalten werden kann.

In diesem festgehaltenen Zustand kann der aus der Fahrbahn separierte Oberflächenbereich OB versetzt werden beispielsweise indem die Bohrkrone 1 nach oben bzw. zur Seite bewegt wird. Durch eine anschließende Bewegung der Keilscheibe 14 nach oben gemäß P1 werden die Bohr-Sägeelemente 3 bis 8 wieder mit ihrem unteren Rand radial nach außen versetzt und der damit nicht mehr geklemmt gehaltene Oberflächenbereich OB wird von der Bohrkrone 1 unter seinem Eigengewicht nach unten herausfallend freigegeben.

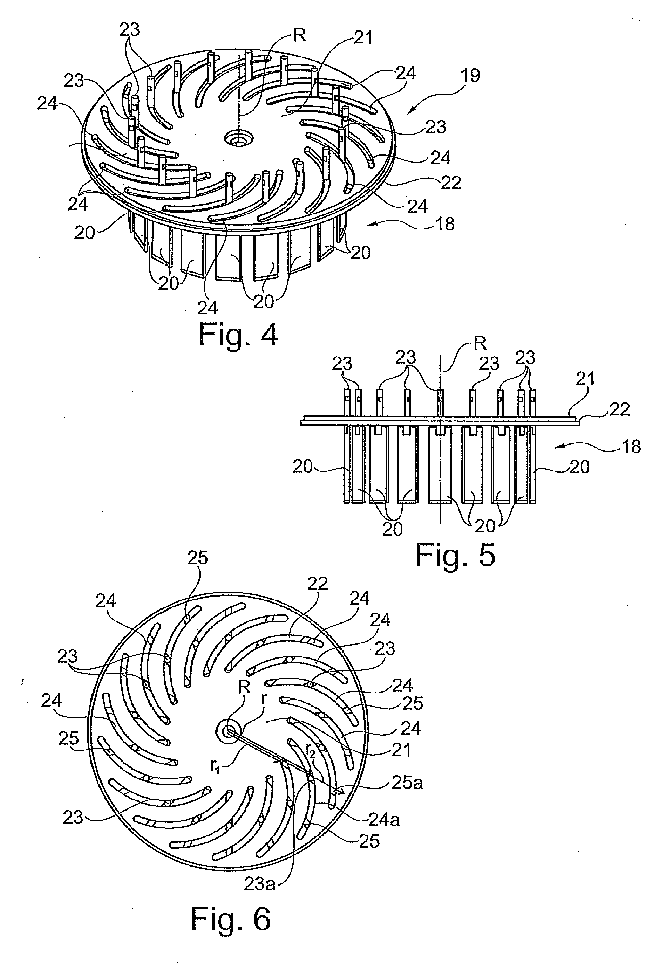

Eine zu Figur 1 bis 3 alternative Bohrkrone 18 mit einer Verstellanordnung 19 zeigen die Figuren 4 bis 6. Des Weiteren umfasst die Bohrkrone achtzehn gleich geformte Bohr-Sägeelemente 20, die um die Rotationsachse R konzentrisch angeordnet sind und schematisiert beispielhaft rechteckförmig bzw. geringfügig entsprechend eines Abschnitts einer zur Rotationsachse R konzentrischen Kreislinie gekrümmt sein können. Ein Achselement im Bereich der Rotationsachse R zum Antrieb der Bohrkrone 18 ist in den Figuren 4 bis 6 weggelassen.

Die Verstellanordnung 19 umfasst eine axial obere bzw. erste Stellscheibe 21 und eine unmittelbar bzw. berührend darunter angeordnete untere beziehungsweise zweite Stellscheibe 22, die nahezu den gleichen Durchmesser aufweisen und oberhalb der Bohr-Sägeelemente 20 positioniert sind.

Jedes einzelne gleichartig ausgebildete Bohr-Sägeelement 20 ist außerdem am oberen antriebseitigen Ende über einen im Wesentlichen zylindrischen Lagerstift 23 über nicht näher dargestellte Aufnahmemittel am entsprechenden Werkzeug aufgenommen.

In der oberen Stellscheibe 21 sind in der Anzahl der Bohr-Sägeelemente 20, hier also achtzehn, gleichartig ausgeformte bzw. gekrümmte und umfänglich gleichmäßig zueinander beabstandete materialfreie Führungsschlitze 24 für einen Durchgriff jeweils eines dazugehörigen Lagerstifts 23 vorhanden. Jeder Führungsschlitz 24 beginnt nahe am radial äußeren Rand der Stellscheibe 21 und endet radial und umfänglich versetzt in einem Bereich, der zum Kreismittelpunkt der Stellscheibe 21 etwa einen halben Radius der Stellscheibe 21 aufweist.

Außerdem sind in der unteren Stellscheibe 22, ebenfalls entsprechend der Anzahl der Bohr-Sägeelemente 20, materialfreie Führungsschlitze 25 ausgeführt, welche speichenartig bzw. geradlinig in radialer Richtung zur Rotationsachse R beziehungsweise zum Zentrum der Stellscheibe 22 ausgerichtet sind.

Anhand eines Bohr-Sägeelements 20 mit dem dazugehörigen herausgegriffenen Lagerstift 23a ist das Zusammenwirken der Stellscheiben 21 und 22 der Verstellanordnung 19 mit den Bohr-Sägeelementen 20 näher erläutert. Das Bohr-Sägeelement 20 ist in der oberen Stellscheibe in einem Führungsschlitz 24a und in der unteren Stellscheibe 22 in einem Führungsschlitz 25a mit dem Lagerstift 23a durchgreifend aufgenommen. Dabei ist die zur Rotationsachse R radiale und umfängliche Position des Bohr-Sägeelements 20 exakt durch das Zusammenspiel der Führungsschlitze 24a und 25a vorgegeben.

Demgemäß greift der Lagerstift 23a sowohl durch den Führungsschlitz 25a der unteren Stellscheibe 22 als auch durch den dazugehörigen gekrümmten Führungsschlitz 24a der oberen Stellscheibe 21. Eine Positionsveränderung des Bohr-Sägeelements 20 mit einer Verstellung des radialen Abstands zur Rotationsachse R erfolgt durch gegenseitiges Verdrehen der oberen Stellscheibe 21 zur unteren Stellscheibe 22 bzw. ggf. durch alleiniges Verdrehen nur einer der zwei Stellscheiben 21, 22. Je nach Drehrichtung wird jedes Bohr-Sägeelement 20 gemäß der Vorgabe der Führungsschlitze 24, 25 radial nach innen oder außen verstellt.

Die Verstellanordnung zum Verdrehen der Stellscheiben 21, 22 ist in den Figuren 4 bis 6 nicht dargestellt.

Der Lagerstift 23a weist in der gemäß der Figuren 4 bis 6 dargestellten Drehstellung der Stellscheiben 21 und 22 einen Radius r zur Rotationsachse R auf, wie auch sämtliche weitere Lagerstifte 23 und damit der Bohr-Sägeelemente 20. Über die Verdrehung der beiden Stellscheiben 21 und 22 beziehungsweise der darin vorhandenen Führungsschlitze 24 und 25 ist eine gemeinsame Einstellung aller Bohr-Sägeelemente 20 bis zu einem minimalen Radius r1 und bis zu einem maximalen Radius r2 gegenüber der Rotationsachse R möglich.

Damit kann ein mit den Bohr-Sägeelementen 20 gebildeter Bohrdurchmesser der Bohrkrone 18 beim Arbeitsbetrieb auf einen gewünschten Wert zwischen r1 und r2 eingerichtet werden. Mit einer radialen Verstellung der Bohr-Sägeelementen 20 nach innen, kann zudem ein herausgetrennter Oberflächenbereich erfindungsgemäß festklemmend gehalten werden.

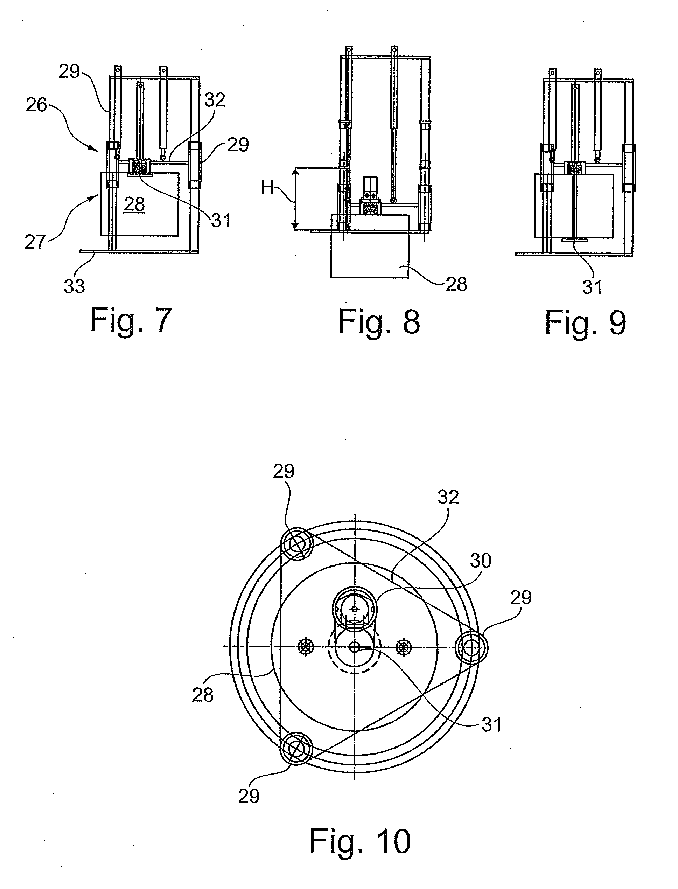

Die Figuren 7 bis 9 zeigen stark schematisiert eine erfindungsgemäße Bearbeitungsvorrichtung 26 in unterschiedlichen seitlichen Darstellungen und gemäß Figur 10 in einer Draufsicht. Die Bearbeitungsvorrichtung 26 weist ein Rotationswerkzeug 27, das beispielsweise gemäß der Figuren 1 bis 3 oder der Figuren 4 bis 6 ausgebildet ist.

Demgemäß umfasst das Rotationswerkzeug 27 eine Bohrkrone 28. Außerdem sind drei gleichartig ausgebildete Vorschub- und Hubzylinder 29 in umfänglicher Richtung gleichmäßig voneinander beabstandet vorgesehen. Mit den Vorschub- und Hubzylindern 29 ist die Bohrkrone 28 in einen angehobenen Zustand gemäß Figur 7 beziehungsweise 9 und in einem abgesenkten beziehungsweise arbeitenden Zustand gemäß Figur 8 verstellbar. Außerdem ist mit einem Hydraulikmotor 30 eine entsprechende Antriebswirkung auf Hydraulikaggregate zur Bewegung der Vorschub- und Hubzylinder vorgesehen. Des Weiteren ist ein aus- und einfahrbarer Auswerfer 31 zum Entfernen eines herausgetrennten Oberflächenbereichs aus de Bohrkrone 28 ersichtlich.

Mit den Vorschub- und Hubzylindern 29 ist eine maximale Hubhöhe H gemäß Figur 8 möglich.

Die Vorschub- und Hubzylinder 29 sind außerdem über eine Verbindungsplatte 32 miteinander stabil gehalten verbunden. Des Weiteren ist eine Anordnung mit einem Auflagering 33 unterseitig der Bearbeitungsvorrichtung 26 vorhanden. Die Vorschub- und Hubzylinder 29 können jeweils in Führungssäulen geführt vertikal aufgenommen sein.

### Bezugszeichenliste:

- 1: Bohrkrone
- 2: Verstellanordnung
- 3-8: Bohr-Sägeelement
- 7a: Schnittkante
- 9: Mantelabschnitt
- 10: Achselement
- 11: Haltescheibe
- 12: Gelenk
- 13: Gelenk
- 14: Keilscheibe
- 15: Speiche
- 16: Lagerbuchsenabschnitt
- 17: Kegelringabschnitt
- 18: Bohrkrone
- 19: Verstellanordnung
- 20: Bohr-Sägeelement
- 21: Stellscheibe
- 22: Stellscheibe
- 23: Lagerstift
- 23a: Lagerstift
- 24: Führungsschlitz
- 24a: Führungsschlitz
- 25: Führungsschlitz
- 25a: Führungsschlitz
- 26: Bearbeitungsvorrichtung
- 27: Rotationswerkzeug
- 28: Bohrkrone
- 29: Vorschub- und Hubzylinder
- 30: Hydraulikmotor
- 31: Auswerfer
- 32: Verbindungsplatte
- 33: Auflagering

## Patentansprüche

1. Vorrichtung zum Bearbeiten einer festen Oberfläche wie einer Straßendecke und dergleichen mit einem um eine Rotationsachse antreibbaren Rotationswerkzeug zum Heraustrennen eines Oberflächenbereichs der festen Oberfläche, wobei die Vorrichtung derart ausgebildet ist, dass die Vorrichtung für einen Arbeitsbetrieb an einem Tragfahrzeug aufnehmbar ist, **dadurch gekennzeichnet, dass** das Rotationswerkzeug eine Bohrkrone (1, 18, 28) mit einem Mantelabschnitt (9) aufweist, der sich zur Rotationsachse entlang einer konzentrischen Kreislinie und in axialer Richtung erstreckt, so dass im Arbeitsbetrieb mit der Bohrkrone (1, 18, 28) der Oberflächenbereich mit kreisrunder Grundfläche heraustrennbar ist, wobei die Bohrkrone (1, 18) Halteabschnitte umfasst, welche über eine Verstellanordnung in radialer Richtung zur Rotationsachse verstellbar sind, so dass der herausgetrennte Oberflächenbereich durch umfänglich am Oberflächenbereich andrückende Halteabschnitte am Rotationswerkzeug festhaltbar ist.

2. Vorrichtung nach Anspruch 1, **dadurch gekennzeichnet, dass** der Mantelabschnitt (1, 18) mehrere zur Rotationsachse umfänglich getrennte Mantelelemente (3-8, 20) aufweist, wobei wenigstens zwei Mantelelemente zur Rotationsachse in radialer Richtung verstellbar sind.

3. Vorrichtung nach Anspruch 1 oder Anspruch 2, **dadurch gekennzeichnet, dass** die Halteabschnitte durch die wenigstens zwei Mantelelemente (3-8, 20) gebildet sind.

4. Vorrichtung nach einem der vorhergehenden Ansprüche, **dadurch gekennzeichnet, dass** die Verstellanordnung derart gestaltet ist, dass die wenigstens zwei Mantelelemente (3-8, 20) gemeinsam gleichartig verstellbar sind.

5. Vorrichtung nach Anspruch 1 oder Anspruch 2, **dadurch gekennzeichnet, dass** sämtliche Mantelelemente (3-8, 20) der Bohrkrone (1, 18) gemeinsam gleichartig verstellbar sind.

6. Vorrichtung nach einem der vorhergehenden Ansprüche, **dadurch gekennzeichnet, dass** jede der wenigstens zwei Mantelelemente (3-8, 20) über eine jeweils zugehörige Lagerstelle (12, 13) am Rotationswerkzeug aufgenommen sind.

7. Vorrichtung nach einem der vorhergehenden Ansprüche, **dadurch gekennzeichnet, dass** die Verstellanordnung derart ausgebildet ist, die Ausrichtung einer Längsachse der wenigstens zwei Mantelelemente (3-8) in zur Rotationsachse axialer Richtung zu verändern.

8. Vorrichtung nach einem der vorhergehenden Ansprüche, **dadurch gekennzeichnet, dass** die Verstellanordnung ein zur Rotationsachse in axialer Richtung bewegbares Stellelement (14) umfasst, mit dem abhängig von der Position des Stellelements (14) entlang der Rotationsachse die Ausrichtung der jeweiligen Längsachse der wenigstens zwei Mantelelemente (3-8) veränderbar ist.

9. Vorrichtung nach einem der vorhergehenden Ansprüche, **dadurch gekennzeichnet, dass** im Bereich der Bohrkrone (1) ein Achselement (10) entlang der Rotationsachse vorhanden ist, welches über ein Verbindungsteil (11) mit den wenigstens zwei Mantelelementen (3-8) verbunden ist, wobei die wenigstens zwei Mantelelemente (3-8) bewegbar am Verbindungsteil (11) aufgenommen sind.

10. Vorrichtung nach einem der vorhergehenden Ansprüche, **dadurch gekennzeichnet, dass** die Verstellanordnung eine Kulissenführung zur Verstellung des radialen Abstands der wenigstens zwei Mantelabschnitte (20) zur Rotationsachse aufweisen.

11. Vorrichtung nach einem der vorhergehenden Ansprüche, **dadurch gekennzeichnet, dass** die Kulissenführung zwei zur Rotationsachse axial benachbarte Stellscheiben (21, 22) mit jeweils wenigstens zwei Führungsbahnen (24, 25) umfasst, wobei die Führungsbahnen (24, 25) mit den wenigstens zwei Mantelelementen (20) derart zusammenwirken, dass die wenigstens zwei Mantelelemente (20) im gleichen radialen Abstand zur Rotationsachse vorhanden sind und der radiale Abstand der wenigstens zwei Mantelelemente (20) zur Rotationsachse gleichartig vorgebbar veränderbar ist.

12. Vorrichtung nach einem der vorhergehenden Ansprüche, **dadurch gekennzeichnet, dass** die beiden Stellscheiben (21, 22) derart aufeinander abgestimmt sind, dass durch gegenseitiges Verdrehen der zwei Stellscheiben (21, 22) um die Rotationsachse des Rotationswerkzeugs jedes Mantelelement (20) der wenigstens zwei Mantelelemente entlang der beiden Führungsbahnen (24, 25) vorgebbar in seinem radialen Abstand zur Rotationsachse insbesondere in einem gleichen Maß verstellbar sind.

13. Vorrichtung nach einem der vorhergehenden Ansprüche, **dadurch gekennzeichnet, dass** eine erste Stellscheibe (21) für die Führung der wenigstens zwei Mantelelemente (20) jeweils eine gleichartig gekrümmt ausgebildete Führungsbahn (24) für das jeweilige Mantelelement (20) aufweist.

14. Vorrichtung nach einem der vorhergehenden Ansprüche, **dadurch gekennzeichnet, dass** eine zweite Stellscheibe (22) für die Führung der wenigstens zwei Mantelelemente (20) jeweils eine gleichartig geradlinig radial zur Rotationsachse verlaufende Führungsbahn (25) für das jeweilige Mantelelement (20) aufweist.

15. Rotationswerkzeug zum Heraustrennen eines Oberflächenbereichs einer festen Oberfläche wie einer Straßendecke und dergleichen, **dadurch gekennzeichnet, dass** das Rotationswerkzeug eine Bohrkrone (1, 18) mit einem Mantelabschnitt (9) aufweist, der sich zur Rotationsachse entlang einer konzentrischen Kreislinie und in axialer Richtung erstreckt, so dass im Arbeitsbetrieb mit der Bohrkrone (1, 18) der Oberflächenbereich mit kreisrunder Grundfläche heraustrennbar ist, wobei die Bohrkrone (1, 18) Halteabschnitte umfasst, welche über eine Verstellanordnung in radialer Richtung zur Rotationsachse verstellbar sind, so dass der herausgetrennte Oberflächenbereich durch umfänglich am Oberflächenbereich andrückende Halteabschnitte am Rotationswerkzeug festhaltbar ist.

16. Fahrzeug mit einer Vorrichtung nach einem der vorhergehenden Ansprüche 1 bis 14.
